# EUROPEAN PATENT SPECIFICATION

(11) **EP 2 274 514 B1**
(45) Date of publication and mention of the grant of the patent: **08.05.2019**
(21) Application number: 09725403.1
(22) Date of filing: 30.03.2009
(51) Int. Cl.: F03D 1/06, B32B 27/08, B32B 7/12, B32B 7/14

(54) **A WIND TURBINE BLADE**
WINDTURBINENSCHAUFEL
PALE D'ÉOLIENNE

(30) Priority: 28.03.2008 GB 0805713
(43) Date of publication of application: 19.01.2011
(73) Proprietor: Blade Dynamics Limited, Cowes PO31 8HU (GB)
(72) Inventor: RUDLING, Paul, Isle of Wight Calborne P030 4JE (GB)
(74) Representative: Bedford, Grant Richard
(86) International application number: PCT/GB2009/000851
(87) International publication number: WO 2009/118545

(56) References cited:
- EP-A- 1 382 640
- WO-A-98/08677
- WO-A-2004/060662
- WO-A-2005/092586
- WO-A-2007/140771
- WO-A-2008/137418
- WO-A1-00/66889
- JP-A- 2006 183 598
- US-A- 5 132 164
- DATABASE WPI Week 199010 Thomson Scientific, London, GB; AN 1990-073050 XP002531234 -& JP 02 028239 A (DENKI KAGAKU KOGYO KK) 30 January 1990 (1990-01-30)

## Description

The present invention relates to a wind turbine blade, and more specifically, to an improved surface coating for a wind turbine blade.

The coating on the surface of a wind turbine blade is exposed to a harsh environment of abrasion, UV, humidity, corrosion, cyclical stresses, and extreme temperature fluctuation and requires a high performance material. Coatings need to retain performance for up to 20 years, putting them in a higher performance and different specification bracket than most civil/automotive applications and additionally they need to be of a cost significantly lower than products typically found in aerospace applications.

Wind turbine blades are normally formed from a glass-fiber reinforced polymer composite. They may be formed from fiberglass composites, polyester, vinylester or carbon and wood with fiberglass in an epoxy matrix. Epoxy-based composites are of use because they deliver a combination of environmental, production, and cost advantages over other resin systems. Carbon fiber-reinforced load-bearing spars can be introduced into the blade as a cost-effective means for reducing weight and increasing stiffness. See, for example, WO 2007/140771, WO 00/66889 and JP 2006 183598.

Wind turbine blades have complex surface topographies to optimize the aerodynamic efficiency of the rotor, to keep the generator within its speed and torque limits, to keep the rotor and tower within their strength limits and to reduce noise and drag. Accordingly, surface coatings that have conventionally been applied to wind turbine blades have focused on painted compositions and in-mold coatings. Such coatings can be relatively quickly applied.

Wind turbine blades are typically coated using either a gelcoat, or are painted. Gelcoat is applied directly into the mould during manufacture of the blade and is formulated from a chemical backbone compatible with the substrate laminate, which is usually a polyester, vinylester or an epoxy resin. Painted finishes are normally achieved using variations of cross-linked polyurethane paint, usually supplied as two components (with a polyol and, or polyester resin base and an aliphatic isocyanate curing agent). These are mixed prior to application and the chemical reaction produces the cross linked polyurethane polymer. Some blades use a combination of both gelcoat applied into the mould and paint applied to the blade after demoulding. This gives additional service life to the surface.

Some wind turbine blades have their leading edges taped with impact resistant tape, which is often applied to older blades to repair them.

The shortcomings of current technology are as follows:
With so-called 'in mould' technology such as gelcoat it is very difficult, if not impossible, to achieve a perfect surface straight out of the mould. Practically, any small variances in mixing quality, viscosity, humidity, substrate condition and operator skill can lead to a large number of cosmetic defects out of the mould but also a number of adhesion problems when in service. In reality a large amount of time and labour (around a third of the labour required to produce the blade) is spent repairing defects in the surface of these blades prior to use and filling manufacturing joins from the mould itself resulting in a cost increase in the blade. These problems, and the probability of a defect in the surface only increases with increasing blade size.

Painting as a process, in particular spraying, is a very wasteful process and requires a lot of operator skill in order to ensure a consistent coating. Furthermore, painted surfaces tend to lack cohesive strength and durability. Polyurethane coating systems used for wind turbine blades are solvent based and when these are sprayed a large amount of hazardous organic solvent (typically 50% by weight), is released into the atmosphere. Spraying of polyurethanes is also a potentially hazardous operation both for workers and the environment due to the isocyanate component in the curing agent which is a sensitising agent and great care has to be taken to prevent fumes of isocyante being inhaled by the operators involved in the spraying operation.

The inventors have found that paint type coatings for turbine blades tend to be insufficiently durable to protect wind turbine blades. Furthermore, paint treatments do little to smooth the surface of any irregularities resulting from in-mold defects. Therefore, paint treatments require extensive preparation of the blade surface before a painted surface coating can be applied. If the paint is applied too thinly then imperfections on the surface of the blade can lead to minor defects in the paint which can dramatically reduce the expected lifetime of the blade.

In addition it is found that, although aliphatic polyurethanes are the highest performing paints available for coating wind turbines, it is often necessary to repair such a coating after little more than five years in service (depending on operating conditions). This is extremely costly and adds additional cost to the service life of the blade as the necessary working life of a wind turbine blade is 20 years.

According to the present invention, there is provided a wind turbine blade as defined by claim 1 in which at least 50% of the surface of which is covered with a self-adhesive thermoplastic film.

By applying a self-adhesive thermoplastic film to the blade, the need for a gelcoat or paint is eliminated. It is estimated that the thermoplastic film will take a similar time to apply as the gelcoat and/or paint. However, it does not require any further treatment once it has been applied, thereby reducing significantly the work involved in finishing the blade. In order to save costs it is preferred that no further coating (paint or otherwise) is applied to the thermoplastic film. Furthermore, less preparatory work needs to be performed before the film is applied, such as smoothing the surface of the blade. The film serves a dual purpose of protecting the blade and can also be used to cover over any minor imperfections, such as pores, in the surface of the blade. Also, the thickness of the film is precisely controlled in advance of its application to the blade ensuring that a surface with a uniform thickness is produced. Film manufacturing techniques allow the composition of the film to be precisely controlled and even to vary across the thickness of the film. The possibility of having variable or poor weathering performance over the lifetime of the blade due to variability in coating production/application processes is therefore almost completely eliminated.

Some advantages would be achieved by the film being applied to a significant proportion of the wind turbine blade with conventional techniques being used to coat the remainder of the blade. However, preferably, substantially all of the blade is covered with the film. The thermoplastic film may be alphatic polyurethane, vinyl, acrylic or fluorinated thermoplastics such as, polyvinylidene fluoride (PVDF); tetrafluoroethylene (TFE); Hexafluoropropylene (HFP); PVDF + HFP copolymer; THV (PVDF, HFP, TFE); polyvinyl fluoride (PVF); FEP (TFE, HFP); perfluoroalkoxy or PFA (TFE, PFVE); chlorotrifluoroethylene (CTFE); CTFE + VF2 (difluoroethylene)/HFP, or a combination of two or more of any of these. Fluorinated polymers are particularly preferred as they are water and dirt repellent.

The thermoplastic film is preferably a self-supporting thermoplastic laminar. That is, the film is preformed as a sheet which has structural integrity on its own before it is applied to the blade. The integrity of the film eases the application of the film to the blade and reduces the likelihood of the film being damaged during the film application process.

It is preferred that the uppermost surface of the film exposed to the atmosphere once applied to the blade is hard wearing and resilient. Accordingly, at least the surface of the film is preferably formed of a high density thermoplastic. The thermoplastic below the surface can be of a lower density to save cost.

The thermoplastic film is formed of a two layer structure having an outer (or surface) layer with enhanced UV, erosion, dirt shedding and weather resistant (latterly referred to throughout as 'weather resistant') properties compared to the inner layer. This allows weather resistant material which may be relatively expensive, to be concentrated towards the outer surface of the film where it is most effective. With the two layer structure, the inner layer preferably has enhanced adhesion properties compared to the outer layer. When a fluorinated polymer is used in the thermoplastic film this can reduce the adhesive properties of the film and so it is preferred that any fluorinated polymer is concentrated more in the surface layer than the inner layer. This facilitates the adhesion of the film to the blade.

It is preferred that the outer layer is formed of a high density thermoplastic. This helps to provide the finished blade with point impact resistance and a high weathering resistance. It has also been observed that providing a coating with a degree of flexible strength helps to provide a smooth coating across the surface of the blade. By "high density" it is understood that the thermoplastic has a density of at least 1.1 g/cc, as measured according to ISO 1183. It is preferred that the surface density is from 1.3 to 3g/cc and more preferably from 1.7 to 1.9g/cc. It has been found that the high density thermoplastic allows for the provision of highly durable, relatively thin films without adding too much weight to the blade. Above 3g/cc it has been found that the film becomes more difficult to handle and apply. High density polymers are generally not suitable for application by painting methods.

It is also preferred that the thermoplastic film is formed by extrusion. When the film comprises a two layer structure the layers may be formed by coextrusion. For ease of manufacture, the film can also be extruded with an adhesive on one surface. Extrusion is particularly preferred as it allows for the provision of an axially oriented film. The degree of axial orientation that can be provided by extrusion of the film helps to provide the thermoplastic film with increased durability.

It is preferred that the thermoplastic film, in particular the outer layer (if a two layer structure is used), exhibits a melt flow rate (ASTM D1238, 230°C, 2.16kg) of 20g/10mins or less. Preferably the melt flow rate is between 1g/10min and 15g/10min and most preferably about 8g/10min. High melt flow rate thermoplastics, such as waxes, are not suitable for use in the present invention. Such thermoplastics do not provide a wear surface that is sufficiently durable for use on a wind turbine blade.

The thermoplastic film preferably has a Shore D hardness (2mm thick; ASTM D2240) of at least 20. More preferably the hardness is from 40 to 100 and most preferably about 60. The hardness of the surface layer helps to protect the surface of the blade against any impacts or point damages, for example, during transport after manufacture.

One way of achieving the enhanced weather resistant properties of the outer layer and enhanced adhesion properties of the inner layer is for the inner and outer layers to be made of polyvinylidene fluoride (PVDF) and polymethyl methacrylate (PMMA) with the outer layer having more PVDF than PMMA and the inner layer having more PMMA than PVDF.

The two layers may be manufactured separately and fused or adhered together. However, preferably, the two layers are co-extruded. This is particularly suitable for a PVDF and PMMA composition as they are very suitable for coextrusion.

The thermoplastic film preferably contains pigmentation, and/or fillers to give the film the desired colour. As most wind turbine blades are required to be white this pigmentation is normally achieved by the addition of suitable surface coated grade of rutile titanium dioxide. The opacity of the film can be measured by observing its radiation transmission properties. In particular, the extent to which visible light is transmitted can be measured. 0% opacity indicates that the film is completely clear and that all the light is transmitted. 100% opacity indicates that the film is completely opaque and that no light is transmitted.

The film preferably also contains amounts of a UV absorber present in levels from 0.1% to 5% based on the film weight. The purpose of the UV absorber is to prevent the passage of damaging UV radiation through the film and into the adhesive layer. The UV absorber may be used singly or may be a combination of two different types of UV absorber to obtain optimal results. Examples of such a combination would be a benzophenone and a hindered amine light stabiliser that can act together in a synergistic manner. Another suitable UV absorber for the thermoplastic film is nano titanium dioxide containing surface modified inorganic oxide particles. This can be extremely effective in such a film and has the additional benefit that it is complete stable in the polymer and cannot suffer from "migration" effects. Such migration effects can be volatilisation during film manufacture causing plate-out effects on the extrusion die, or migration effects in service that can lead to reduced weathering performance or even dissbondment of the film. Such a nano titanium dioxide would be present in the film at between 0.1% and 8% of the film weight (excluding the adhesive).

All of the percentages recited for the composition of the film material are by weight percentages for the film excluding the adhesive layer.

For a wind turbine blade, it is desirable that the blades do not have a high gloss and/or high reflectance as this causes an unacceptable nuisance in the finished product when the blades are in service. Therefore, preferably, this effect is minimised by surface treating the film, for example by applying a cold roller to the film as it is extruded and/or by a matting agent incorporated into the film. A suitable matting agent would be a light stable acrylic resin of controlled particle size.

The thickness of the thermoplastic film (excluding the adhesive) is preferably less than 300µm, and preferably between 50 and 150 microns thick. It has been found that films of these thicknesses are sufficiently durable.

When applying the film to the blade, care must be taken to avoid air bubbles becoming trapped between the film and the blade. The film may therefore be porous such that it is air permeable and water impermeable as this helps prevent the formation of air bubbles during the manufacturing process.

The adhesive is preferably a pressure sensitive adhesive such as a rubber, acrylic, modified acrylic (tackifier modified) or silicone adhesive. It is preferred that the adhesive does not require thermal activation and can be applied at temperatures between 5 and 35 degrees. Photo-activated adhesives (including initiators) may be used which can be cured by exposure to radiation after the film has been applied.

The invention also extends to a method of manufacturing a wind turbine blade comprising moulding the blade body and adhering a thermoplastic film to at least 50% of the surface of the body as defined in appended claim 15.

The invention also extends to a method of repairing a wind turbine blade by adhering a thermoplastic film to at least 50% of the surface of the body as defined in appended claim 16. Any steps disclosed herein relating to the manufacture of a wind turbine blade apply equally to the repair of a wind turbine blade.

Wind turbine blades may become worn through exposure to the weather or by impact with wind-born debris and it may be necessary to repair the blade. It is possible when performing the repair to fit a conventional blade with a thermoplastic film. Alternatively, the step of repair may involve repairing a blade according to the present invention by removing a previous thermoplastic film and replacing it with a new thermoplastic film in accordance with the films of the present invention.

The film is preferably applied to the blade body in a number of strips running between the leading and trailing edges of the blade. The film can also be preferably applied in a manner with the strips oriented such that the complexity of the curvature in which the film is applied can be markedly reduced.

The edge of one strip may overlap with the edge of an adjacent strip. Alternatively, the edges of adjacent strips do not overlap and the join is covered with a further strip of thermoplastic film, painted with acrylic or epoxy adhesive, painted with a PVDF paint or hot welded together. It is preferred that any surface painting is restricted to the immediate area of a seam or join between strips of the film.

Similar considerations may apply at the leading and trailing edges where the adjacent strips may either overlap or the join may be covered with a further strip of thermoplastic film extending along the edge.

Surprisingly, the inventors have found that applying the thermoplastic film in strips does not interfere with the performance of the finished turbine blade. It had been speculated that the seams and overlaps could result in surface irregularities and increase drag and/or noise. The thermoplastic film of the present invention is sufficiently thin and the self supporting laminar of the film is sufficiently resilient, that these disadvantages are not observed. Rather, the film serves to increase the durability of the turbine blade and to provide a smooth and efficient blade surface.

The method preferably also includes the step of heating the thermoplastic film shortly before when/or during its application to the blade body. This is preferably done by blowing hot air onto the film. This increases the flexibility of the film allowing it to be applied more easily to the surface of the blade. In view of the self-adhesive nature of the film preferably no heating of the film is required once the film has been applied to the blade surface.

The film can be applied 'dry' to the blade surface or 'wet' utilising water or other suitable fluid to enable the film to be more easily positioned without creasing or trapping air.

The film may be supplied in a number of sections each being specially shaped to fit on an appropriate section of the blade. Preferably, however, the film is applied from a roll. In this case, the film may be trimmed before its application to the blade body. This is particularly useful, for example, around the root of the blade which has a complex shape.

The thermoplastic film may be applied to a full length moulding of the blade. However, it is also possible that the blade is made up of a plurality of modules as disclosed in our earlier application GB 0717690.2. In this case, the thermoplastic film may either be applied to the individual modules before they are assembled into the finished blade, or the modules may be assembled before the film is applied.

According to a third aspect of the invention, there is provided a two layer thermoplastic film comprising an upper layer and a lower layer, wherein:
the upper layer comprising
   (a) 50% to 85% of polyvinylidene fluoride (PVDF), wherein up to 30% of the PVDF may be replaced by hexafluoropropylene (HFP) ;
   (b) 10% to 45% polymethyl methacrylate (PMMA);
   (c) optionally up to 8% UV stabilisers and/or absorbers;
   (d) optionally up to 10% matting agent; and
   (e) optionally up to 40% of an inorganic pigment;
the lower layer comprising
   (f) a polymer of 10% to 45% of (PVDF), wherein up to 30% of the PVDF may be replaced by hexafluoropropylene (HFP);
   (g) 50% to 85% PMMA;
   (h) optionally up to 8% UV stabilisers/absorbers;
   (i) optionally up to 10% matting agent; and
   (j) optionally up to 40% of an inorganic pigment;
wherein the film has an initial gloss of less than 30% when measured with a reflectometer at an angle of 60° with respect to the film surface.

Preferably components (a) and (f) are copolymers of PVDF and hexafluoropropylene in the recited amounts. That is, the components are copolymers containing monomers of each of the named polymers.

Preferably the upper layer has a thickness between 40 and 240 microns, more preferably 60 and 200 microns and the lower layer has a thickness between 2 and 60 microns, more preferably between 10 and 40, and most preferably between 2 and 20 microns. In a preferred embodiment the upper layer is between 60 and 240 microns and the lower layer is between 2 and 10 microns.

Preferably the UV stabilisers are based on ultrafine 'nano' titanium dioxide materials containing surface modified inorganic oxide particles.

Preferably the PVDF contains up to 30% HFP or is a copolymer of 70% PVDF and 30% HFP.

Preferably the film further comprises adhesive on the lower layer.

Preferably the film has an opacity of 60% or greater, more preferably 80% of greater. It is advantageous for the film to be opaque as it transmits very little light, and therefore reflects, scatters, or absorbs most of it. This helps to make the wind turbine blade less conspicuous.

It should be understood that any of the preferred features of the above method or manufacture of repair may be applied in combination with any of the preferred features of the blade referred to above. Furthermore, any features disclosed in respect of the film of the present invention can be applied in combination with any of the preferred features of the blade.

In a fourth aspect, the present invention also encompasses the use of the above-described films for use as a covering of a wind turbine blade. It is preferred that the film is arranged so that the upper layer corresponds to the surface layer of the blade and is exposed to the atmosphere in use.

An example of a wind turbine blade in accordance with the present invention will now be described with reference to the accompanying drawings, in which:
Fig. 1 is a schematic plan view of an entire blade;
Fig. 2 is a cross-section of a first example of a join between adjacent strips;
Fig. 3 is a cross-section to a second example of a join between adjacent strips;
Figs. 4A-E show a number of different configurations of strips that could be used;
Figs. 5A-E show similar configurations to those of Figs. 4A-E but include an edge protection strip;
Fig. 6 is a cross-section that refers to an example of a film and the underlying blade; and
Fig. 7 is a cross-section through a second example of a film and the underlying blade.

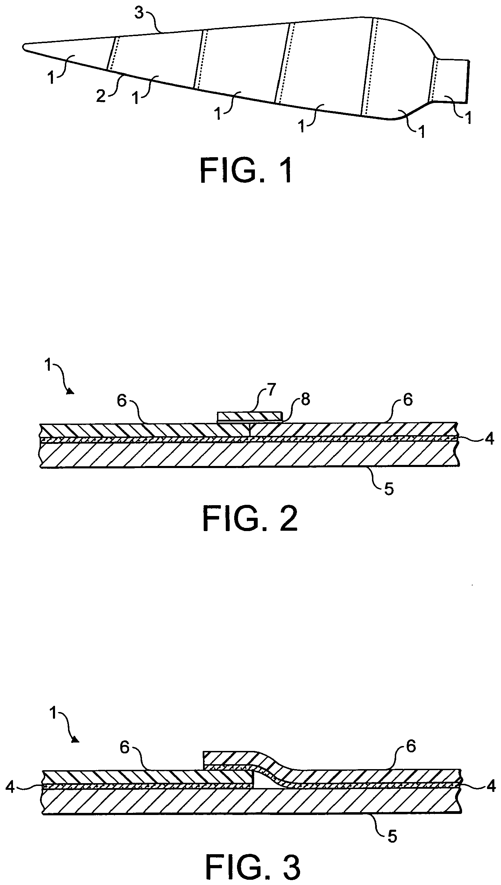

A wind turbine blade is shown in Fig. 1. The basic body of the blade may be formed in accordance with conventional techniques in which full length mouldings of each half are made and the two halves are joined together in a clam shell-like construction. Alternatively, the blades may have a modular construction. as described in our earlier GB application number 0717690.2.

The present invention is concerned only with the surface coating. As can be seen from Fig. 1, the blade is covered with a number of strips 1 of self-adhesive of thermoplastic material 6 and adhesive 4. Each strip extends from the leading edge 2 to the trailing edge 3. The opposite side of the blade corresponds to this. At these leading and trailing edges 2, 3 the strip on one side may overlap slightly with the strip on the opposite side or a further thin strip may be provided along the edge to cover the join between strips in a similar manner to that described in the reference to Figs. 2 and 3 below.

As can be seen from Fig. 1, each strip overlaps with an adjacent strip. The join between the two is shown in more detail in Fig. 3. Adhesive 4 is provided on the lower surface of each strip and will adhere to the underlying blade surface 5. At an overlap portion strip 1 adheres to the surface of the adjacent thermoplastic film 6 as shown. An alternative is shown in Fig. 2 in which adjacent strips 1, 1 abut one another and a further strip 7 with adhesive 8 of the same or a similar material runs along the join. The thickness of the material is such that the overlap portion or the further thin strips do not have a significant effect on the performance of the blade. As an alternative, the join shown in Fig. 3 may be painted, for example with a PVDF paint and, indeed, this is the current preference.

The strips 1 are supplied on a roll. The strips may have a backing material covering the adhesive that is peeled off before the strip is applied to the blade surface. However, no backing material is necessary if the top surface of the film 1 is of a material that does not adhere to the adhesive. An appropriate amount is unrolled and, if necessary, trimmed to the correct shape. Hot air is then blown onto the strip to make it flexible and the strip is then applied to the blade surface. The strip is initially adhered at a location close to one of the edges 23 and are progressively adhered across the blade with the operator being careful to ensure that no air is trapped as the film is progressively adhered.

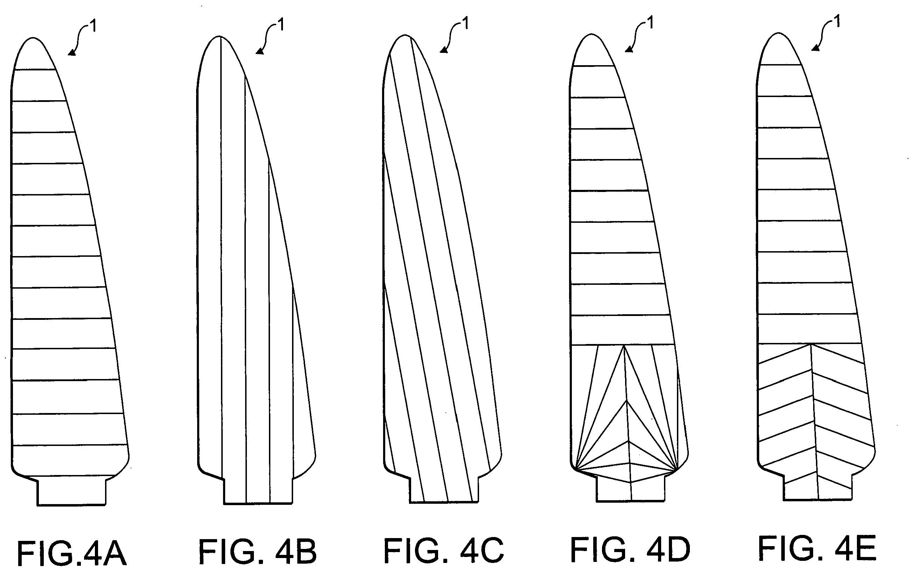

Figs. 4A-E show various configurations of the strips which may be applied to a blade. The blades may have the same configuration of strips on both sides, or they may be different. The strips may run across the blade (Fig. 4A), along the blade (Fig. 4B) or diagonally (Fig. 4C). Alternatively, the root end of the blade, which has the greatest curvature may be provided with a different configuration of strips from the remainder of the blade. In Fig. 4D the root end of the blade is covered with a number of triangular strips which converge adjacent to the root end. These strips offer the greatest degree of conformity with the blade curvature and this example will be most useful for a relatively un-pliable material. However, in the example of Fig. 4D the strips either need to be supplied pre-cut, or if they are taken from a roll, require a considerable amount of trimming and this example will be more difficult to produce in practice. As a compromise, the example of Fig. 4E provides reasonably good conformity in the curved regions, but the strips can be used from a roll with relatively little trimming.

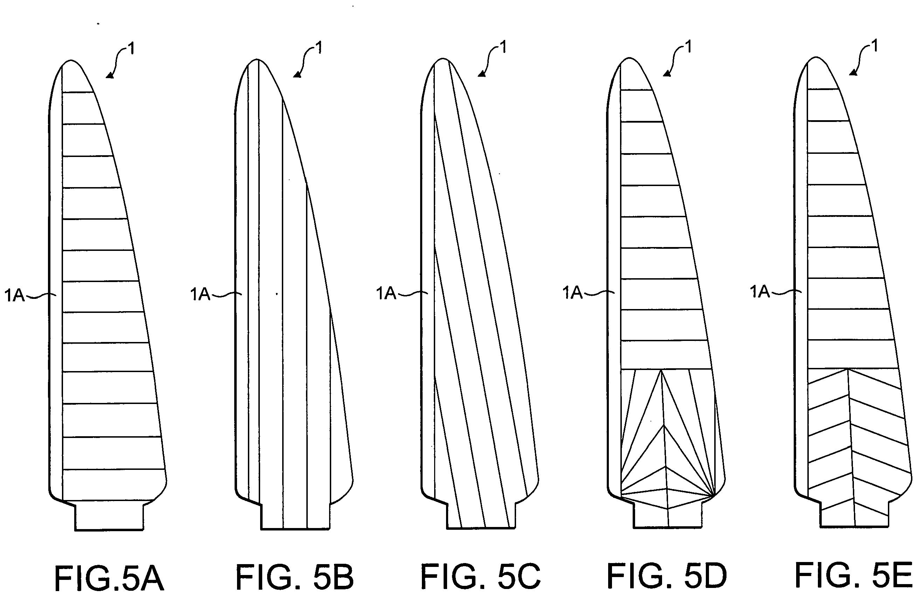

The examples of Figs. 5A to 5E are similar to those shown in the corresponding Fig. 4 representations. The only different is that the leading edge is provided with a protective strip 1A. This extends to both sides of the blade and therefore provides good weather proofing at the leading edge where it is most required.

The current preference is for the configuration shown in Fig. 5A as this has a weather proofing strip 1A on the leading edge, and also the transverse arrangement of strips 1 ensures that the seams between adjacent strips lie substantially in the direction of travel of the blade thereby minimising any turbulence.

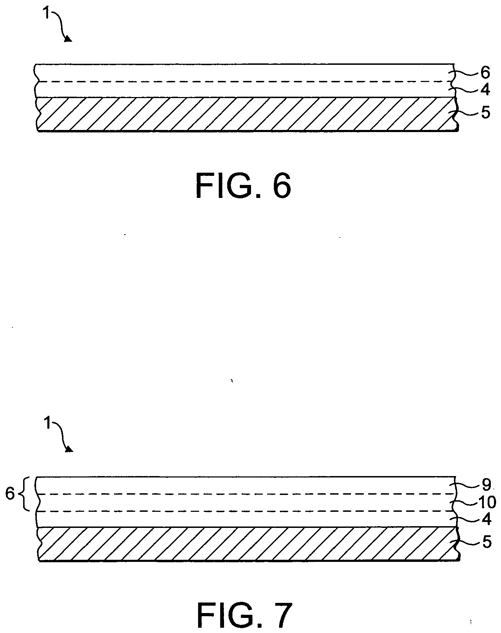

The nature of the thermoplastic film and adhesive will now be described in greater detail with reference to Figs. 6 and 7. Fig. 6 is a cross-section through the blade surface and a first film consisting of adhesive 4 layer and a thermoplastic film 6 which has a single layer. Fig. 7 is similar except that the thermoplastic film 6 has separated into upper 9 and lower 10 layers.

In all cases, the thermoplastic film 6 is preferably between 50 and 300 microns thick.

For the single layer of Fig. 4, the thermoplastic film preferably consists of 45.9% of polyvinylidene fluoride, 25.5% PMMA, 1.5% UV stabilisers and absorbers, 1.5% matting agent and 25.6% inorganic pigment.

For the double layer of Fig. 5, the upper layer preferably consists of 52.8% of polyvinylidene fluoride (15% of which is HFP), 22% PMMA, 1.5% UV stabilisers and absorbers, 1.5% matting agent and 22.2% inorganic pigment to give sufficient colour and opacity. The lower layer preferably consists of 22% of polyvinylidene fluoride (15% of which is HFP), 52.8% PMMA, 1.5% UV stabilisers and absorbers, 1.5% matting agent and 22.2% inorganic pigment to give sufficient colour and opacity.

For the double layer of figure 5 the upper layer is of a thickness between 5 and 295 microns and the lower layer is of a thickness between 5 and 295 microns. With the upper layer preferably being between 40 and 240 microns and the lower layer preferably being between 10 and 60 microns.

The film may be extruded (in the case of the Fig. 4 example) or co-extruded (in the case of the Fig. 5 example) using an extruder which is well known, for example the type of co-extruder used to manufacture UPVC windows. The extruded material may then be subjected to a second surface treatment such as a cold roller to produce the desired lack of reflectiveness of the upper surface. The film can then also preferably pass through a second process to coat adhesive onto the lower surface before the film is wound on to a roll ready for transportation.

## Claims

1. A wind turbine blade at least 50% of the surface of which is covered with a self-adhesive, thermoplastic film to provide a smooth blade surface,
wherein the film is applied in a number of strips running across the blade between the leading and trailing edges of the blade, or along the blade or diagonally, wherein the thermoplastic film comprises a two layer structure having an outer layer with enhanced weather resistant properties compared to the inner layer.

2. The wind turbine blade according to claim 1, wherein the film is applied in a number of strips arranged to reduce the complexity of curvature of each strip.

3. The wind turbine blade according to claim 1 or claim 2, wherein the edge of one strip overlaps with the edge of an adjacent strip.

4. The wind turbine blade according to claim 1 or claim 2, wherein edges of adjacent strips do not overlap and the join is covered with a further strip of thermoplastic film.

5. The wind turbine blade according to claim 1 or claim 2, wherein edges of adjacent strips do not overlap and the join is painted with a PVDF paint.

6. The wind turbine blade according to any of the preceding claims, wherein the thermoplastic film comprises at least one of an aliphatic polyurethane, a vinyl, an acrylic or a fluorinated thermoplastic.

7. The wind turbine blade according to any of the preceding claims, wherein all of the blade is covered with the film covering.

8. The wind turbine blade according to any of claims 1-7, wherein the inner layer has enhanced adhesion properties compared to the outer layer.

9. The wind turbine blade according to any of claims 1-8, wherein the inner and outer layers include polyvinylidene fluoride (PVDF) and polymethyl methacrylate (PMMA) with the outer layer having more PVDF than PMMA and the inner layer having more PMMA than PVDF.

10. The wind turbine blade according to any of claims 1 to 9, wherein the layers are co-extruded.

11. The wind turbine blade according to any one of the preceding claims, wherein the thermoplastic film has an initial gloss of less than 30% when measured with a reflectometer at an angle of 60° with respect to the film surface.

12. The wind turbine blade according to any one of the preceding claims, wherein the thermoplastic film is less than 300pm thick, or from 50 to 150pm thick.

13. The wind turbine blade according to any one of the preceding claims, wherein the thermoplastic film is porous such that it is air permeable and water impermeable.

14. The wind turbine blade according to any one of the preceding claims, wherein the self-adhesive is an acrylic or silicon based adhesive.

15. A method of manufacturing a wind turbine blade comprising moulding the blade body and adhering a thermoplastic film to at least 50% of the surface of the body to provide a smooth blade surface, and
wherein the film is applied in a number of strips running across the blade between the leading and trailing edges of the blade, or along the blade or diagonally, and
wherein the thermoplastic film comprises a two layer structure having an outer layer with enhanced weather resistant properties compared to the inner layer.

16. A method of repairing a wind turbine blade comprising adhering a thermoplastic film to at least 50% of the surface of a worn blade body to provide a smooth blade surface, wherein the film is applied in a number of strips running across the blade between the leading and trailing edges of the blade, or along the blade or diagonally, and
wherein the thermoplastic film comprises a two layer structure having an outer layer with enhanced weather resistant properties compared to the inner layer.

17. The method of manufacturing or repair according to claim 15 or 16, wherein the film is applied in a number of strips arranged to reduce the complexity of curvature of each strip.

18. The method of manufacturing or repair according to any one of claims 15 to claim 17, wherein the edge of one strip overlaps with the edge of an adjacent strip.

19. The method of manufacturing or repair according to any one of claims 15 to claim 17, wherein edges of adjacent strip do not overlap and the join is covered with a further strip of thermoplastic film.

20. The method of manufacturing or repair according to any one of claims 15 to claim 17, wherein edges of adjacent strips do not overlap and the join is painted with a PVDF paint.

21. The method of manufacturing or repair according to any one of claims 15 to 20, wherein the thermoplastic film is heated shortly before and/or during its application to the blade body.

22. The method of manufacturing or repair according to any one of claims 15 to 21 to produce a blade according to any one of claims 1 to 14.

## Patentansprüche

1. Windturbinenblatt, dessen Oberfläche zu mindestens 50% mit einer selbstklebenden, thermoplastischen Folie abgedeckt ist, um eine glatte Blattoberfläche bereitzustellen,
wobei die Folie in einer Anzahl von Streifen aufgebracht wird, die über dem Blatt zwischen den Vorder- und Hinterkanten des Blattes, oder entlang des Blattes oder diagonal verlaufen, wobei die thermoplastische Folie eine Zweischichtstruktur umfasst, die eine Außenschicht mit verbesserten wetterbeständigen Eigenschaften im Vergleich zur Innenschicht aufweist.

2. Windturbinenblatt nach Anspruch 1, wobei die Folie in einer Anzahl von Streifen aufgebracht ist, die so angeordnet sind, dass sie die Krümmungskomplexität jedes Streifens reduzieren.

3. Windturbinenblatt nach Anspruch 1 oder Anspruch 2, wobei sich die Kante eines Streifens mit der Kante eines benachbarten Streifens überlappt.

4. Windturbinenblatt nach Anspruch 1 oder Anspruch 2, wobei sich die Kanten benachbarter Streifen nicht überlappen und die Verbindungsstelle mit einem weiteren Streifen aus thermoplastischer Folie abgedeckt ist.

5. Windturbinenblatt nach Anspruch 1 oder Anspruch 2, wobei sich die Kanten benachbarter Streifen nicht überlappen und die Verbindungstelle mit einem PVDF-Lack lackiert ist.

6. Windturbinenblatt nach einem der vorstehenden Ansprüche, wobei die thermoplastische Folie mindestens eines aus einem aliphatischen Polyurethan, einem Vinyl, einem Acryl oder einem fluorierten Thermoplast umfasst.

7. Windturbinenblatt nach einem der vorstehenden Ansprüche, wobei das gesamte Blatt mit der Folienabdeckung abgedeckt ist.

8. Windturbinenblatt nach einem der Ansprüche 1-7, wobei die Innenschicht im Vergleich zur Außenschicht verbesserte Haftungseigenschaften aufweist.

9. Windturbinenblatt nach einem der Ansprüche 1-8, wobei die Innen- und Außenschicht Polyvinylidenfluorid (PVDF) und Polymethylmethacrylat (PMMA) beinhalten, wobei die Außenschicht mehr PVDF als PMMA und die Innenschicht mehr PMMA als PVDF aufweist.

10. Windturbinenblatt nach einem der Ansprüche 1 bis 9, wobei die Schichten coextrudiert sind.

11. Windturbinenblatt nach einem der vorstehenden Ansprüche, wobei die thermoplastische Folie einen Anfangsglanz von weniger als 30 % aufweist, gemessen mit einem Reflektometer in einem Winkel von 60° zur Folienoberfläche.

12. Windturbinenblatt nach einem der vorstehenden Ansprüche, wobei die thermoplastische Folie weniger als 300 µm dick oder 50 bis 150 µm dick ist.

13. Windturbinenblatt nach einem der vorstehenden Ansprüche, wobei die thermoplastische Folie porös ist, sodass sie luftdurchlässig und wasserundurchlässig ist.

14. Windturbinenblatt nach einem der vorstehenden Ansprüche, wobei der Selbstkleber ein Klebstoff auf Acryl- oder Silikonbasis ist.

15. Verfahren zur Herstellung eines Windturbinenblattes, umfassend das Formen des Blattkörpers und das Aufkleben einer thermoplastischen Folie auf mindestens 50% der Oberfläche des Körpers, um eine glatte Blattoberfläche zu erhalten, und
wobei die Folie in einer Anzahl von Streifen aufgebracht ist, die über dem Blatt zwischen der Vorder- und Hinterkante des Blattes, oder entlang des Blattes oder diagonal verlaufen, und
wobei die thermoplastische Folie eine Zweischichtstruktur umfasst, die eine Außenschicht mit verbesserten wetterbeständigen Eigenschaften im Vergleich zur Innenschicht aufweist.

16. Verfahren zur Reparatur eines Windturbinenblattes, umfassend das Aufkleben einer thermoplastischen Folie auf mindestens 50% der Oberfläche eines abgenutzten Blattkörpers, um eine glatte Blattoberfläche bereitzustellen,
wobei die Folie in einer Anzahl von Streifen aufgebracht ist, die über dem Blatt zwischen der Vorder- und Hinterkante des Blattes, oder entlang des Blattes oder diagonal verlaufen, und
wobei die thermoplastische Folie eine Zweischichtstruktur umfasst, die eine Außenschicht mit verbesserten wetterbeständigen Eigenschaften im Vergleich zur Innenschicht aufweist.

17. Verfahren zur Herstellung oder Reparatur nach Anspruch 15 oder 16, wobei die Folie in einer Anzahl von Streifen aufgebracht wird, die so angeordnet sind, dass sie die Krümmungskomplexität jedes Streifens reduzieren.

18. Verfahren zur Herstellung oder Reparatur nach einem der Ansprüche 15 bis 17, wobei sich die Kante eines Streifens mit der Kante eines benachbarten Streifens überlappt.

19. Verfahren zur Herstellung oder Reparatur nach einem der Ansprüche 15 bis 17, wobei sich die Kanten des benachbarten Streifens nicht überlappen und die Verbindungsstelle mit einem weiteren Streifen aus thermoplastischer Folie abgedeckt wird.

20. Verfahren zur Herstellung oder Reparatur nach einem der Ansprüche 15 bis 17, wobei die Kanten benachbarter Streifen sich nicht überlappen und die Verbindungsstelle mit einem PVDF-Lack lackiert wird.

21. Verfahren zur Herstellung oder Reparatur nach einem der Ansprüche 15 bis 20, wobei die thermoplastische Folie kurz vor und/oder während seiner Aufbringung auf den Blattkörper erwärmt wird.

22. Verfahren zur Herstellung oder Reparatur nach einem der Ansprüche 15 bis 21, um ein Blatt nach einem der Ansprüche 1 bis 14 herzustellen.

## Revendications

1. Pale d'éolienne dont au moins 50% de la surface est recouverte d'un film thermoplastique autoadhésif pour fournir une surface de pale lisse,
dans laquelle le film est appliqué en un certain nombre de bandes s'étendant à travers la pale entre les bords d'attaque et de fuite de la pale, ou le long de la pale ou diagonalement, dans laquelle le film thermoplastique comprend une structure à deux couches ayant une couche extérieure avec des propriétés améliorées de résistance aux intempéries par rapport à la couche intérieure.

2. Pale d'éolienne selon la revendication 1, dans laquelle le film est appliqué en un certain nombre de bandes agencées pour réduire la complexité de courbure de chaque bande.

3. Pale d'éolienne selon la revendication 1 ou 2, dans laquelle le bord d'une bande chevauche le bord d'une bande adjacente.

4. Pale d'éolienne selon la revendication 1 ou 2, dans laquelle des bords de bandes adjacentes ne se chevauchent pas et le joint est recouvert d'une autre bande de film thermoplastique.

5. Pale d'éolienne selon la revendication 1 ou 2, dans laquelle des bords de bandes adjacentes ne se chevauchent pas et le joint est peint avec une peinture PVDF.

6. Pale d'éolienne selon l'une quelconque des revendications précédentes, dans laquelle le film thermoplastique comprend au moins un parmi un polyuréthane aliphatique, un vinyle, un acrylique ou un thermoplastique fluoré.

7. Pale d'éolienne selon l'une quelconque des revendications précédentes, dans laquelle toute la pale est recouverte du recouvrement de film.

8. Pale d'éolienne selon l'une quelconque des revendications 1 à 7, dans laquelle la couche intérieure a des propriétés d'adhérence améliorées par rapport à la couche extérieure.

9. Pale d'éolienne selon l'une quelconque des revendications 1 à 8, dans laquelle les couches intérieure et extérieure incluent du polyfluorure de vinylidène (PVDF) et du polyméthacrylate de méthyle (PMMA) avec la couche extérieure ayant plus de PVDF que de PMMA et la couche intérieure ayant plus de PMMA que de PVDF.

10. Pale d'éolienne selon l'une quelconque des revendications 1 à 9, dans laquelle les couches sont co-extrudées.

11. Pale d'éolienne selon l'une quelconque des revendications précédentes, dans laquelle le film thermoplastique a un brillant initial de moins de 30 % lorsque mesuré avec un réflectomètre à un angle de 60° par rapport à la surface de film.

12. Pale d'éolienne selon l'une quelconque des revendications précédentes, dans laquelle le film thermoplastique a une épaisseur inférieure à 300 µm ou une épaisseur de 50 à 150 µm.

13. Pale d'éolienne selon l'une quelconque des revendications précédentes, dans laquelle le film thermoplastique est poreux de sorte qu'il est perméable à l'air et imperméable à l'eau.

14. Pale d'éolienne selon l'une quelconque des revendications précédentes, dans laquelle l'autoadhésif est un adhésif à base d'acrylique ou de silicium.

15. Procédé de fabrication d'une pale d'éolienne comprenant le moulage du corps de pale et l'adhésion d'un film thermoplastique sur au moins 50% de la surface du corps pour fournir une surface de pale lisse, et
dans lequel le film est appliqué en un certain nombre de bandes s'étendant à travers la pale entre les bords d'attaque et de fuite de la pale, ou le long de la pale ou diagonalement, et
dans lequel le film thermoplastique comprend une structure à deux couches ayant une couche extérieure avec des propriétés améliorées de résistance aux intempéries par rapport à la couche intérieure.

16. Procédé de réparation d'une pale d'éolienne comprenant l'adhésion d'un film thermoplastique sur au moins 50 % de la surface d'un corps de pale usé pour fournir une surface de pale lisse, dans lequel le film est appliqué en un certain nombre de bandes s'étendant à travers la pale entre les bords d'attaque et de fuite de la pale, ou le long de la pale ou diagonalement, et dans lequel le film thermoplastique comprend une structure à deux couches ayant une couche extérieure avec des propriétés améliorées de résistance aux intempéries par rapport à la couche intérieure.

17. Procédé de fabrication ou de réparation selon la revendication 15 ou 16, dans lequel le film est appliqué en un certain nombre de bandes agencées pour réduire la complexité de courbure de chaque bande.

18. Procédé de fabrication ou de réparation selon l'une quelconque des revendications 15 à 17, dans lequel le bord d'une bande chevauche le bord d'une bande adjacente.

19. Procédé de fabrication ou de réparation selon l'une quelconque des revendications 15 à 17, dans lequel des bords de bande adjacente ne se chevauchent pas et le joint est recouvert d'une autre bande de film thermoplastique.

20. Procédé de fabrication ou de réparation selon l'une quelconque des revendications 15 à 17, dans lequel des bords de bandes adjacentes ne se chevauchent pas et le joint est peint avec une peinture PVDF.

21. Procédé de fabrication ou de réparation selon l'une quelconque des revendications 15 à 20, dans lequel le film thermoplastique est chauffé brièvement avant et/ou pendant son application sur le corps de pale.

22. Procédé de fabrication ou de réparation selon l'une quelconque des revendications 15 à 21 pour produire une pale selon l'une quelconque des revendications 1 à 14.
